# EUROPÄISCHE PATENTSCHRIFT

(11) **EP 1 209 826 B1**
(45) Veröffentlichungstag und Bekanntmachung des Hinweises auf die Patenterteilung: **18.02.2004**
(21) Anmeldenummer: 01000609.6
(22) Anmeldetag: 09.11.2001
(51) Int. Cl.: H04B 10/17, H01S 3/30

(54) **Optisches Übertragungssystem mit jeweils mehrere Pumpquellen aufweisenden kaskadierte Raman-Verstärkern**
Optical communication system with cascaded Raman amplifiers, each having multiple pump sources
Système de communication optique avec amplifcateurs Raman en cascade ayant plusieurs sources de pompage

(30) Priorität: 21.11.2000 DE 10057659
(43) Veröffentlichungstag der Anmeldung: 29.05.2002
(73) Patentinhaber: SIEMENS AKTIENGESELLSCHAFT, 80333 München (DE)
(72) Erfinder: Krummrich, Dr. Peter, D-81379 München (DE); Neuhauser, Dr. Richard, D-81477 München (DE)

(56) Entgegenhaltungen:
- EP-A- 0 139 081
- EP-A- 0 734 105
- EP-A- 1 018 666
- EP-A- 1 022 870
- WO-A-99/29057
- US-A- 5 920 423
- US-A- 6 115 174

## Beschreibung

Die Erfindung betrifft ein optisches Übertragungssystem mit jeweils mehrere Pumpquellen aufweisenden kaskadierte Raman-Verstärkern nach dem Oberbegriff des Patentanspruchs 1.

Für die Übertragung eines optischen WDM-Signals entlang langen Faserstrecken sind Verstärkermodule nach jeweiligen Übertragungsabschnitten erforderlich. Eine wirkungsvolle Methode zur zusätzlichen Verstärkung eines Signals beruht auf stimulierter Raman-Streuung, bei der ein Pumpsignal in die Übertragungsfaser eingespeist wird. Das Pumpsignal wird mittels mehreren Pumpquellen, meistens Laserdioden, erzeugt. Die Verwendung mehrerer Pumpwellenlängen führt zu einem breiten flachen Gewinnspektrum.

Im Dokument EP 0139081 B1, "Optical Communications System Using Raman Repeaters And Components Therefor", wird ein kaskadiertes Raman-Verstärkersystem mit verschiedenen Verstärkern (RA1, RA2...) offenbart. Diese Verstärker weisen mehrere Pumpquelle auf (Spalte 8, Zeile 21-28), die ihre Pumpleistung zur Raman-Verstärkung eines WDM-Signals in die Übertragungsfaser einkoppeln. Dadurch wird das Raman-Gewinnspektrums flacher, d.h. die WDM-Kanäle werden am Ausgang der den Raman-Verstärker bildenden Übertragungsfaser ähnliche Pegel aufweisen (Spalte 8, Zeile 32-35).

Der Wellenlängensatz der Pumpquellen wird so gewählt, daß alle Kanäle des WDM-Signals unter Betrachtung des Raman-Gewinn-Spektrums (s. "Fiber Optic Communication Systems", G.P. Agrawal, 2. edition, p.381, fig.8.11) möglichst gleich verstärkt werden. Ein Kanal mit einer Frequenzverschiebung von 13,2 THz zu einer Pumpfrequenz wird maximal verstärkt. Liegt eine kleinere oder größere Frequenzdifferenz zwischen einem Kanal und einem Pumpsignal vor, so wird der Kanal weniger verstärkt. Durch Verwendung einer größeren Anzahl von unterschiedlichen Pumpwellenlängen werden alle Kanäle des WDM-Übertragungssignalen homogener verstärkt.

Aus EP 1 018 666 A1 ist ein breitbandiger Raman-Verstärker bekannt, dessen Pumpquellen unterschiedliche Wellenlängen mit variablen Wellenlängenabständen zwischen 6 nm und 35 nm aufweisen. Dadurch wird die Abhängigkeit des Raman-Gewinns von der Wellenlänge für die Verstärkung eines breitbandigen Signals unterdrückt, so dass ein zusätzliches Filter zur Einebnung des Gewinnspektrums nicht erforderlich ist.

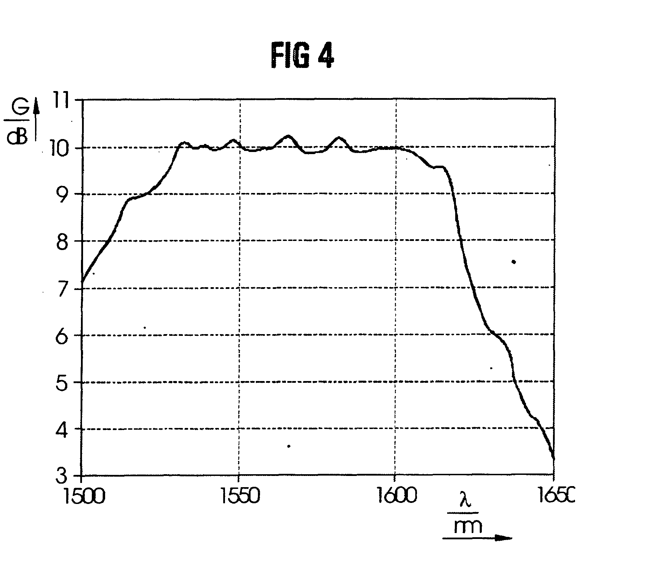

Die Verwendung einer großen Anzahl von Pumpquellen ist z.B. in "1-THz-Spaced Multi-Wavelenght Pumping For Broadband Raman Amplifiers", ECOC 2000, 26^{th} European Conference on Optical Communication, Sept. 3-7, Proceedings Vol. 2, Sept. 5/2000, p.73-74" beschrieben. Die Pumpquelle weist 16 "wavelenghtmultiplexed" Pumplaser (Laserdioden) mit 1-THz Frequenzabstand auf (introduction, §2, Zeile 22-23), deren Signale in die Übertragungsfaser eingespeist werden. Dadurch werden die Kanäle des WDM-Signals im C- und L-Band (1527-1607 nm) mit weniger als 0,1 dB Raman-Gewinn-Differenzen verstärkt. Es wird kein zusätzliches Filter (gain flattening filter) benötigt. Nach der Figur 3 dieser Literaturstelle ist noch eine leichte Welligkeit im Gewinnspektrum zu erkennen, die unterhalb von 0,1 dB liegt.

Zur Einebnung des Gewinnspektrums wurden auch noch Versuche mit mehr als 16 Pumplasern durchgeführt. Bei "Messungen an Erbium-dotierten Faserverstärkern für WDM-Systeme", NTZ (Informationstechnik + Telekommunikation), Heft 5/2000, p.60-63, ist eine Anordnung mit bis zu 38 Lasern in der Pumpquelle dargestellt (Figur 3, "Einfluß der Anzahl der Laserquellen auf die Messgenauigkeit bei indirekter Messung"). Das Gewinn spektrum weist einen sehr flachen Bereich für eine Bandbreite von weniger als 40 nm auf.

In EP 1 022 870 A2 ist ein optisches Übertragungssystem mit kaskadierten Raman-Verstärkern beschrieben, deren Pumpquellen unterschiedliche breitbandige Wellenlängenbereiche aufweisen. Dabei werden Pumpsignale einer Pumpquelle mittels Pumpsignalen einer weiteren Pumpquelle z. B. zur Reduzierung des Rauschens oder zur Änderung der Verkippung bzw. des Profils des Raman-Gewinns verstärkt. Die Spektren bzw. die Wellenlängenbereiche zwischen Pumpsignalsätzen der Pumpquelle sind dabei etwa um dem Stokes-Shift getrennt. Damit erfolgt eine Raman-Verstärkung zwischen Pumpsignalen verschiedener Pumpquellen, jedoch auf Kosten einer hohen Anzahl von verwendeten Pumpquellen.

In US 6 115 174 ist ein Raman-Verstärker mit mehreren Pumpquellen zur Erzeugung von Pumpsignalen mit unterschiedlichen Wellenlängen beschrieben, bei dem zur Verstellung des Raman-Gewinnspektrums die Leistungen der Pumpquelle einzeln gesteuert oder die Wellenlängenabstände zwischen benachbarten Wellenlängen geändert werden. Verringert man die Wellenlängenabstände bei den Pumpquellen in einem Raman-Verstärker, muss unvermeidlich eine höhere Anzahl von Pumpquellen zur gleichen Deckung des ursprünglichen Gewinnspektrums eingesetzt werden.

Eine Beschränkung der Anzahl der Pumpquellen für einen Verstärker verursacht größere Welligkeit im Amplitudenspektrum des verstärkten WDM-Signals. Dieser Effekt wird die Übertragung noch mehr beeinträchtigen, wenn mehrere gleiche Raman-Verstärker für weitere Übertragungsstrecken in Kaskade angeordnet werden, weil diese störenden Effekte sich addieren.

Durch sogenannte "gain flattening filter" ("Fiber Optic Communication Systems", G.P. Agrawal, 2. edition, p. 415) können diese Kanalpegelunterschiede nach jedem Verstärkermodul reduziert werden. Diese Filter weisen für Wellenlängen mit höheren Pegeln eine entsprechende größere Dämpfung auf.

In den beschriebenen Verfahren werden also Methoden vorgeschlagen, bei denen das Gewinnspektrum eines Raman-Verstärkers innerhalb der Bandbreite (C+L-Band oder schmaler) des zu verstärkenden WDM-Signals durch Erhöhung der Anzahl der Pumpquellen flacher wird. Trotzdem werden noch manchmal Filter zur Minimierung der Gewinnspektrum-Differenzen benötigt. Alle diese Methoden sind sehr aufwendig.

Die Aufgabe der Erfindung besteht also darin, bei einem WDM-Übertragungssytem mit kaskadierten Raman-Verstärkern ein flaches Gewinnspektrum mit reduziertem Aufwand zu erzielen.

Erfindungsgemäß wird diese Aufgabe durch ein optisches Übertragungssystem gemäß den Merkmalen des Anspruchs 1 gelöst.

Zweckmäßige Weiterbildungen werden in den abhängigen Ansprüchen beschrieben.

Bei dem erfindungsgemäßen Übertragungssystem werden die kaskadierten Raman-Verstärker durch Pumpsignale mit unterschiedlichen Wellenlängensätzen realisiert, so daß sich die störenden Verstärkungsschwankungen entlang der Übertragungsstrecke kompensieren.

Nach einer Raman-Verstärkerstufe wird das Gewinnspektrum noch eine größere Welligkeit (Dellen oder Buckel) aufweisen. Die Pumpwellenlängen von zwei kaskadierten Raman-Verstärkern werden deshalb so gewählt, daß das Gewinnspektrum des zweiten Verstärkers an den Stellen Buckel aufweist, an denen der erste Verstärker Dellen aufweist, und umgekehrt. Auf diese Weise kompensieren sich die Schwankungen der beiden Gewinnspektren bzw. die Summe beider Gewinnspektren führt zu einer geringeren Welligkeit. Dies läßt sich beispielweise bei zwei folgenden Verstärkerstufen durch einen Versatz der Pumpwellenlängensätze um etwa ein halbes Pumpwellenlängenintervall erzielen. Das Pumpwellenlängenintervall bezeichnet hier etwa den mittleren Abstand zwischen den Pumpwellenlängen von spektral benachbarten Laserdioden einer Pumpquelle. Bei einem Übertragungssystem mit N kaskadierten Raman-Verstärkern wird ein Versatz zwischen der jeweiligen Pumpwellenlängensätze von etwa 1/N des Pumpwellenlängenintervalls gewählt. Sollte das Gewinnspektrum nicht periodische Artefakte nach einer oder mehreren Verstärkerstufen aufweisen, d.h. unregelmäßig verteilte Buckel oder Dellen, werden die Pumpwellenlänge individuell korrigiert, damit eine entsprechende Kompensation der Störungen im endgültigen Gewinnspektrum erfolgt.

Eine Übertragungsstrecke kann auch mit periodischen Reihenfolgen von zwei oder mehreren aufeinanderfolgenden Raman-Verstärkern, die miteinander unterschiedliche Wellenlängensätze aufweisen, gebildet werden. Bei solchen Konfigurationen ist eine maximale Anzahl von vier mit Wellenlängesatz versetzten Raman-Verstärkern in der Praxis ausreichend. Eine größere Anzahl ist auch vorstellbar, aber mit höherem Aufwand realisierbar.

Die Verwendung unterschiedlicher Pumpwellenlängensätze hat den großen Vorteil, daß wenige Pumpquellen pro Raman-Verstärker benötigt werden, weil sich die Verstärkungsunterschiede werden entlang aller Abschnitte der Übertragungsstrecke adäquat kompensieren. Das WDM-Signal auf der Empfangsseite der gesamten Strecke wird kleine Pegeldifferenzen aufweisen, wenn die Pumpwellenlängen der Raman-Verstärker günstig gegeneinander verschoben werden.

Dadurch werden auch keine Filter (gain flattening filter) zur Pegeldifferenzminimierung nach jedem Verstärker oder am Ende der Übertragungsstrecke benötigt.

Die Pumpleistungen bzw. die spektralen Breiten der Pumpkanäle werden so gewählt, daß Effekte durch stimulierte-Brillouin-Streuung SBS vermieden werden. Eine übliche SBS-Schwelle liegt bei maximal 10 mW innerhalb der Brillouin-Bandbreite von 20 MHz.

Die Pumpsignale können in die Übertragungsabschnitte je nach Anforderungen sowohl ko- als auch kontradirektional eingespeist werden.

Ein Ausführungsbeispiel der Erfindung wird anhand von Figuren näher beschrieben. Dabei zeigen:
- Figur 1:: Einen Abschnitt des Übertragungssystems mit kaskadierten Raman-Verstärkern,
- Figur 2:: Den normierten Raman-Gewinn als Funktion der Frequenzdifferenz zwischen Pump- und Übertragungskanal,
- Figur 3:: Einzelne Gewinnspektren von zwei Raman-Verstärkern des erfindungsgemäßen optischen Übertragungssystems,
- Figur 4:: Das nach zwei kaskadierten Raman-Verstärkungen aufsummierte Gewinnspektrum des erfindungsgemäßen optischen Übertragungssystems.

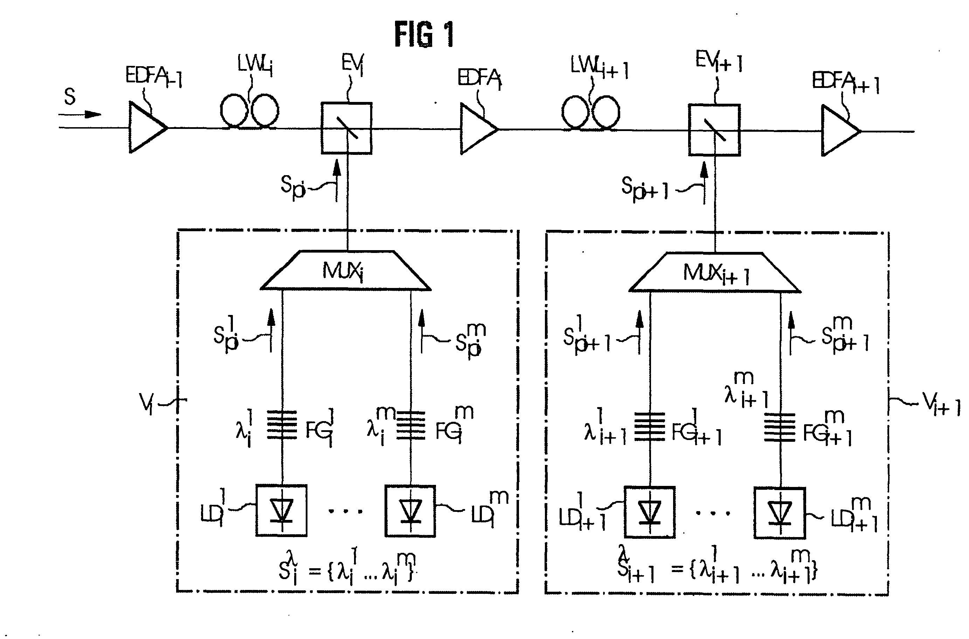

In Figur 1 ist ein Abschnitt der Übertragungsstrecke mit zwei Raman-Verstärkern Vᵢ und Vᵢ₊₁ dargestellt. Am Eingang der Übertragungsstrecke wird ein WDM-Signal S eingespeist. Die Übertragungsstrecke weist zwei Lichtwellenleiterabschnitte LWLᵢ₋₁ und LWLᵢ mit Faserverstärkern EDFAᵢ₋₁, EDFAᵢ, EDFAᵢ₊₁, auf. Dem Faserverstärker EDFAᵢ ist ein Raman-Verstärker Vᵢ vorgeschaltet, bei dem ein Summenpumpsignal Sₚᵢ mittels einer Einkoppeleinrichtung EVᵢ kontradirektional zur Ausbreitungsrichtung des WDM-Signals einspeist. Das Summenpumpsignal Sₚᵢ besteht aus den Signalen der Pumpquellen LD¹ᵢ, ..., LD^{m}ᵢ. Diese werden durch einen Multiplexer MUXᵢ zum Summenpumpsignal Sₚᵢ zusammen gefaßt. Die Pumpquellen (Laserdioden) LD¹ᵢ, ... , LD^{m}ᵢ der Raman-Verstärker Vᵢ erzeugen jeweils m Pumpsignale mit den Wellenlängen (λ¹ᵢ,..., λ^{m}ᵢ). Die jeweils m Pumpsignale eines Ramän-Vertärkers werden durch Fasergitter FG¹ᵢ,...,FG^{m}ᵢ spektral stabilisiert und anschließend dem Multiplexer MUXᵢ zugeführt. Das Summenpumpsignal Sₚᵢ₊₁ des folgenden Raman-Verstärkers Vᵢ₊₁ mit derselben Struktur wie Vᵢ wird nach einem weiteren Übertragungsabschnitt (EDFAᵢ₊₁ + LWLᵢ₊₁) in die Übertragungsfaser eingespeist. Die Pumpwellenlängen λ¹ᵢ₊₁,..., λ^{m}ᵢ₊₁ der Pumpquellen LD¹ᵢ₊₁,..., LD^{m}ᵢ₊₁ des Raman-Verstärkers Vᵢ₊₁ sind so gewählt, daß sie von den Wellenlängen λ¹ᵢ,..., λ^{m}ᵢ um etwa ein halbes des Pumpwellenlängenintervals versetzt sind. Dadurch erfogt die Kompensation des unregelmäßigen Gewinnspektrums eines einzelnen Raman-Verstärkers.

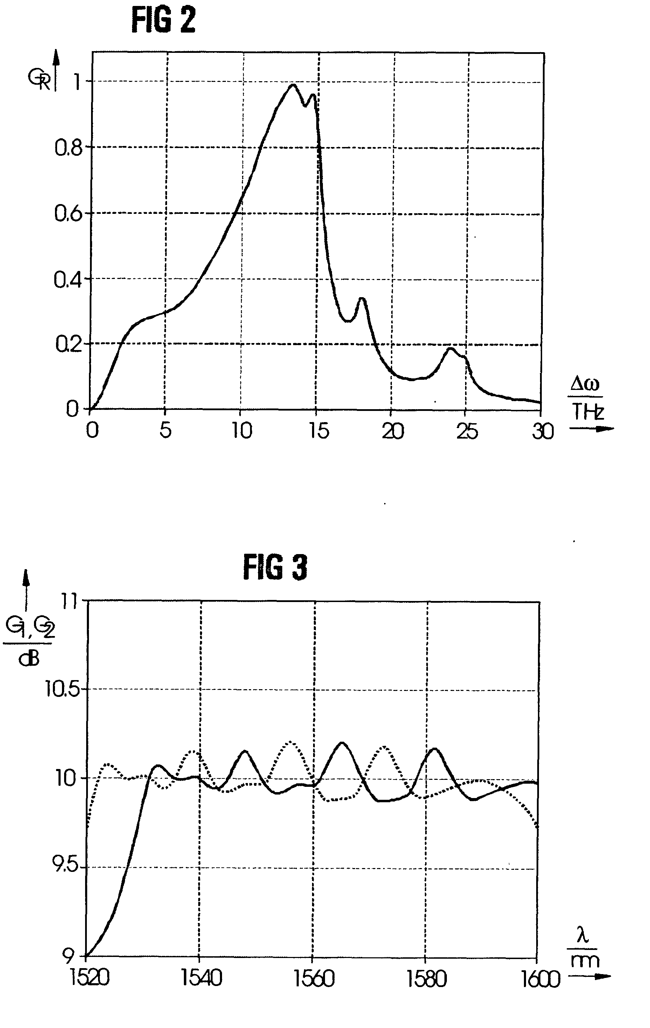

Figur 2 stellt den normierten Gewinn G_{R} der Raman-Verstärkung in Abhängigkeit von Frequenzunterschied Δω (Stokes-Shift) zwischen einem Übertragungssignal und einem Pumpsignal dar. Eine maximale Verstärkung wird bei einem Frequenzunterschied von 13,2 THz zwischen einem WDM-Signal und einem Pumpsignal erreicht.

In Figur 3 sind die einzelnen Gewinnspektren G₁ (durchgezogene Linie) und G₂ der beiden Raman-Verstärker dargestellt. Die Verschiebung des Wellenlängensatzes des zweiten Raman-Verstärkers verursacht ebenfalls eine Verschiebung des zweiten Gewinnspektrums, das eine änhliche Form als das erste Gewinnspektrum aufweist. Eine optimale Verschiebung der Wellenlängensatz der zweiten zur ersten Verstärkerstufe ist erreicht, wenn die Summe beider Gewinnspektren minimale Amplitudedifferenzen aufweist.

In Figur 4 ist das Gewinnspektrum G für ein WDM-Signal mit einer Bandbreite von 1530 bis 1600 nm nach zwei Raman-Verstärkern Vᵢ, Vᵢ₊₁ (siehe Figur 1) dargestellt. Beide Pumpquellen weisen jeweils 8 Laserdioden auf. Die Pumpquellen des ersten Raman-Verstärkers weist die folgenden Wellenlängen auf: 1409 nm, 1424 nm, 1438 nm, 1453 nm, 1467 nm, 1482 nm, 1497 nm, 1513 nm. Die Pumpwellenlängen des zweiten Raman-Verstärkers sind im Vergleich zu den des ersten Raman-Verstärkers um 9 nm zu kleineren Wellenlängen verschoben.

Mit mehr als zwei Raman-Verstärkern und individueller Korrektur der Pumpwellenlängen kann die Welligkeit des Gewinnspektrums weiter reduziert werden.

## Patentansprüche

1. Optisches Übertragungssystem mit kaskadierten jeweils mehrere Pumpquellen (LDⁱ₁, ..., LDⁱₘ) (i=1...N) aufweisenden Raman-Verstärkern (V₁, ... , V_{N}) ,
**dadurch gekennzeichnet,**
**daß** zur Erzielung eines flachen Gewinnspektrums eines mehrere optische Kanäle aufweisenden Signals (S) die Pumpquellen (LDⁱₖ) (k=1...m) mindestens zweier Raman-Verstärker (Vᵢ) (i=1...N) unterschiedliche Wellenlängensätze (S^{λ}ᵢ) mit dazwischen liegenden Pumpwellenlängenintervallen aufweisen derart daß Pumpwellenlängen eines der Wellenlängensätze (S^{λ}ᵢ) gegenüber Wellenlängensätzen (S^{λ}ᵢ₊₁) eines anderen Raman-Verstärkers so versetzt sind, dass sie jeweils in dessen Pumpwellenlängenintervallen auftreten.

2. Optisches Übertragungssystem nach Anspruch 1,
**dadurch gekennzeichnet,**
**daß** die Wellenlängensätze (S^{λ}ᵢ) der den jeweiligen Raman-Verstärkern (Vᵢ) zugeordneten Pumpquellen möglichst gleich große Pumpwellenlängenintervalle aufweisen.

3. Optisches Übertragungssystem nach Anspruch 1 oder 2,
**dadurch gekennzeichnet,**
**daß** bei jedem Raman-Verstärker (Vᵢ) (i=1...N) ein Multiplexer (MUXᵢ) zur Zusammenfassung der von den Pumpquellen (LDⁱₖ) (k=1...m) abgegebenen Pumpsignale (S^{k}ₚᵢ) vorgesehen ist.

4. Optisches Übertragungssystem nach Anspruch 1 oder 2,
**dadurch gekennzeichnet,**
**daß** eine Einkoppeleinrichtung (EVᵢ) zur Einkopplung des Summenpumpsignals (Sₚᵢ) eines Raman-Verstärkers (Vᵢ) (i=1...N) in eine Übertragungsfaser (LWLᵢ) vorgesehen ist.

5. Optisches Übertragungssystem nach einem der vorhergehenden Ansprüche,
**dadurch gekennzeichnet,**
**daß** als Pumpquellen (LDⁱₖ) (k=1...m) Laserdioden vorgesehen sind.

6. Optisches Übertragungssystem nach den Ansprüchen 1, 2 oder 5,
**dadurch gekennzeichnet,**
**daß** am Ausgang der Pumpquellen (LDⁱ₁,...,LDⁱₘ) jeweils ein optischer Filtersatz (FGⁱ₁,...,FGⁱₘ) zur Selektion und Stabilisierung der Pumpwellenlängen ({λⁱ₁,..., λⁱₘ} = S^{λ}ᵢ) eines Raman-Verstärkers (Vᵢ) (i=1...N) eingeschaltet ist.

7. Optisches Übertragungssystem nach den Ansprüchen 1, 2 oder 6,
**dadurch gekennzeichnet,**
**daß** zwischen zwei Raman-Vertärkern (Vᵢ, Vⱼ) (i=1...N) j=1...N, i≠j) die beiden Pumpwellenlängensätze (Sλᵢ,S^{λ}ⱼ) um etwa der Hälfte des Wellenlängenabstands zwischen zwei benachbarten Pumpquellen (LDⁱₖ) (k=1...m) gegeneinander verschoben sind.

8. Optisches Übertragungssystem nach den Ansprüchen 1, 2 oder 6,
**dadurch gekennzeichnet,**
**daß** bei einer Übertragungsstrecke mit N Raman-Verstärkern die Pumpwellelängensätze (S^{λ}ᵢ, um etwa 1/N des Wellenlängenabstands zwischen zwei benachbarten Pumpquellen (LDⁱₖ) (k=1...m)gegeneinander verschoben sind.

9. Optisches Übertragungssystem nach den Ansprüchen 1, 2 oder 6,
**dadurch gekennzeichnet,**
**daß** die Wellenlängen (S^{λ}ᵢ) der Pumpsignale (S¹ₚᵢ,..., S^{m}ₚᵢ) des Raman-Verstärkers (Vi) (i=1...N) einzeln so gewählt werden, daß das Gewinnspektrum minimale Differenzen aufweist.

10. Optisches Übertragungssystem nach einem der vorhergehenden Ansprüche,
**dadurch gekennzeichnet,**
**daß** die Übertragungsstrecke aufeinanderfolgende Raman-Verstärker (Vᵢ,Vᵢ₊₁...) mit maximal vier unterschiedlichen Pumpwellenlängensätzen (S^{λ}ᵢ, S^{λ}ᵢ₊₁...) aufweist.

11. Optisches Übertragungssystem nach einem der vorhergehenden Ansprüche,
**dadurch gekennzeichnet,**
**daß** die Leistung der Pumpquellen (LDⁱₖ) (i=1...N, k=1...m) innerhalb der Bandbreite der stimulierten-Brillouin-Streuung (SBS) kleiner als die SBS-Schwelle ist.

## Claims

1. Optical transmission system having cascaded Raman amplifiers (V₁,..., V_{N}) which each have a number of pump sources (LDⁱ₁,...,LDⁱₘ) (i=1...N),
**characterized**
**in that**, in order to achieve a flat gain spectrum for a signal (S) which has a number of optical channels, the pump sources (LDⁱₖ) (k=1...m) have at least two different wavelength sets (S^{λ}ᵢ) which have different Raman amplifiers (Vᵢ) (i=1...N) with intermediate pump wavelength intervals, such that pump wavelengths of one of the wavelength sets (S^{λ}ᵢ) are offset with respect to wavelength sets (S^{λ}ᵢ₊₁) of another Raman amplifier, such that they in each case occur in its pump wavelength intervals.

2. Optical transmission system according to Claim 1,
**characterized**
**in that** the wavelength sets (S^{λ}ᵢ) of the pump sources which are associated with the respective Raman amplifiers (Vᵢ) have pump wavelength intervals which as far as possible are of equal size.

3. Optical transmission system according to Claim 1 or 2,
**characterized**
**in that** a multiplexer (MUXᵢ) is provided for each Raman amplifier (Vᵢ) (i=1...N) in order to combine the pump signals (S^{k}ₚᵢ) emitted from the pump sources (LDⁱₖ) (k=1...m).

4. Optical transmission system according to Claim 1 or 2,
**characterized**
**in that** an injection device (EVᵢ) is provided for injecting the sum pump signal (Sₚᵢ) of a Raman amplifier (Vᵢ) (i=1...N) into a transmission fibre (LWLᵢ) .

5. Optical transmission system according to one of the preceding claims,
**characterized**
**in that** laser diodes are provided as pump sources (LDⁱₖ) (k=1...m).

6. Optical transmission system according to Claims 1, 2 or 5,
**characterized**
**in that** an optical filter set (FGⁱ₁,...,FGⁱₘ) for selection and stabilization of the pump wavelengths ({λⁱ₁,...,λⁱₘ} = S^{λ}ᵢ) of a Raman amplifier (Vᵢ) (i=1...N) is connected to each output of the pump sources (LDⁱ₁,..., LDⁱₘ)·

7. Optical transmission system according to Claims 1, 2 or 6,
**characterized**
**in that** the two pump wavelength sets (S^{λ}ᵢ, S^{λ}ⱼ) are each shifted through approximately half the wavelength separation between two adjacent pump sources (LDⁱₖ) (k=1...m) with respect to one another between two Raman amplifiers (Vᵢ, Vⱼ) (i=1...N, j=1...N, i≠j).

8. Optical transmission system according to Claims 1, 2 or 6,
**characterized**
**in that**, in a transmission path with N Raman amplifiers, the pump wavelength sets (S^{λ}ᵢ) are shifted with respect to one another by approximately 1/N of the wavelength separation between two adjacent pump sources (LDⁱₖ) (k=1...m).

9. Optical transmission system according to Claims 1, 2 or 6,
**characterized**
**in that** the wavelengths (S^{λ}ᵢ) of the pump signals (S¹ₚᵢ, S^{m}ₚᵢ) of the Raman amplifier (Vᵢ) (i=1...N) are chosen individually such that the gain spectrum has minimum differences.

10. Optical transmission system according to one of the preceding claims,
**characterized**
**in that** the transmission path has successive Raman amplifiers (Vᵢ, vᵢ₊₁....) with a maximum of four different pump wavelength sets (S^{λ}ᵢ, S^{λ}ᵢ₊₁...).

11. Optical transmission system according to one of the preceding claims,
**characterized**
**in that** the power of the pump sources (LDⁱₖ) (i=1...N, k=1...m) within the bandwidth of the stimulated Brillouin scatter (SBS) is below the SBS threshold.

## Revendications

1. Système de transmission optique avec des amplificateurs Raman (V₁, ..., V_{N}) montés en cascade et présentant respectivement plusieurs sources de pompage (LDⁱ₁, ..., LDⁱₘ) (i = 1 .... N),
**caractérisé en ce que**
pour obtenir un spectre de gain plat d'un signal (S) présentant plusieurs canaux optiques, les sources de pompage (LDⁱₖ) (k = 1 ...m) d'au moins deux amplificateurs Raman (Vᵢ) (i = 1 ... N) présentent différents ensembles de longueurs d'ondes (S^{λ}ᵢ) avec des intervalles de longueurs d'ondes de pompage intercalés de telle sorte que des longueurs d'ondes de pompage d'un ensemble de longueurs d'ondes deviennent des ensembles d'ondes (S^{λ}ᵢ) sont décalés par rapport à des ensembles de longueurs d'ondes (S^{λ}ᵢ₊₁) d'un autre amplificateur Raman de telle sorte qu'elles apparaissent respectivement dans des intervalles de longueurs d'ondes de pompage de cet amplificateur.

2. Système de transmission optique selon la revendication 1,
**caractérisé en ce que**
les ensembles de longueurs d'ondes (S^{λ}ᵢ) des sources de pompage attribuées aux amplificateurs Raman (Vᵢ) respectifs présentent des intervalles de longueurs d'ondes de pompage les plus identiques possibles.

3. Système de transmission optique selon la revendication 1 ou 2,
**caractérisé en ce que**
pour chaque amplificateur Raman (Vᵢ) (i = 1 ...N), il est prévu un multiplexeur (MUXᵢ) pour le regroupement des signaux de pompage (S^{k}ₚᵢ) émis par les sources de pompage (LDⁱₖ) (k = 1 ... m).

4. Système de transmission optique selon la revendication 1 ou 2,
**caractérisé en ce que**
un appareil d'injection (EVᵢ) est prévu pour l'injection du signal de pompage cumulé (Sₚᵢ) d'un amplificateur Raman (Vᵢ) (i = 1 ...N) dans une fibre de transmission (LWLᵢ).

5. Système de transmission optique selon l'une quelconque des revendications précédentes,
**caractérisé en ce que**
des diodes lasers sont prévues comme sources de pompage (LDⁱₖ) (k = 1 ... m).

6. Système de transmission optique selon la revendication 1, 2 ou 5,
**caractérisé en ce que**
à la sortie de chaque source de pompage (LDⁱ₁, ... , LDⁱₘ) est enclenché un jeu de filtres optiques (FGⁱ₁, ... , FGⁱₘ) pour la sélection et la stabilisation des longueurs d'ondes de pompage ({λⁱ₁, ..., λⁱₘ = S^{λ}ᵢ}) d'un amplificateur Raman (Vᵢ) (i = 1 ... N).

7. Système de transmission optique selon la revendication 1, 2 ou 6,
**caractérisé en ce que**
entre deux amplificateurs Raman (Vᵢ, Vⱼ) (i = 1 ... N, j = 1 ...N, i # j), les deux ensembles de longueurs d'ondes de pompage (S^{λ}ᵢ, S^{λ}ⱼ) sont décalés l'un par rapport à l'autre d'environ la moitié de l'espacement de longueurs d'ondes entre deux sources de pompage voisines (LDⁱₖ) (k = 1 ...m).

8. Système de transmission optique selon la revendication 1, 2 ou 6,
**caractérisé en ce que**
sur une section de transmission équipée de N amplificateurs Raman, les ensembles de longueurs d'ondes de pompage (S^{λ}ᵢ) sont décalés l'un par rapport à l'autre d'environ 1/N de l'espacement de longueurs d'ondes entre deux sources de pompage voisines (LDⁱₖ) (k = 1 ... m).

9. Système de transmission optique selon la revendication 1, 2 ou 6,
**caractérisé en ce que**
les longueurs d'ondes (S^{λ}ᵢ) des signaux de pompage (S¹ₚᵢ, ... ,S^{m}ₚᵢ) de l'amplificateur Raman (Vᵢ) (i = 1 ... N) sont choisies individuellement de telle sorte que le spectre de gain présente des différences minimales.

10. Système de transmission optique selon l'une quelconque des revendications précédentes,
**caractérisé en ce que**
le tronçon de transmission présente des amplificateurs Raman (Vᵢ, Vᵢ₊₁ ...) successifs avec au maximum quatre ensembles différents de longueurs d'ondes de pompage (S^{λ}ᵢ, S^{λ}ᵢ₊₁...).

11. Système de transmission optique selon l'une quelconque des revendications précédentes,
**caractérisé en ce que**
la puissance des sources de pompage (LDⁱₖ) (i = 1 ...N, k = 1 ... m) à l'intérieur de la largeur de bande de la dispersion de Brillouin stimulée (SBS) est inférieure au seuil SBS.
